## Europäisches Patentamt

## European Patent Office

## Office européen des brevets

(19)

(11) Numéro de publication: **0 128 257**
**B1**

(12) **FASCICULE DE BREVET EUROPEEN**

(45) Date de publication du fascicule du brevet:
**22.04.87**

(51) Int. Cl.⁴: **B 23 B 13/02,** B 23 B 13/12

(21) Numéro de dépôt: **83810243.2**

(22) Date de dépôt: **06.06.83**

(54) **Procédé de ravitaillement d'un tour en barres.**

(43) Date de publication de la demande:
**19.12.84 Bulletin 84/51**

(45) Mention de la délivrance du brevet:
**22.04.87 Bulletin 87/17**

(84) Etats contractants désignés:
**CH DE FR GB IT LI SE**

(56) Documents cités:
**EP - A - 0 071 518**
**DE - A - 1 402 204**
**DE - A - 1 918 843**
**GB - A - 691 087**
**GB - A - 895 273**
**GB - A - 1 213 973**
**NL - A - 7 713 034**
**US - A - 2 577 203**
**US - A - 3 095 771**

(73) Titulaire: **SAMECA S.A., Route de Diesse,**
**CH-2516 Lamboing (CH)**

(72) Inventeur: **Geiser, Markus, La Colline 306, CH-2603 Péry**
**(CH)**
Inventeur: **Vandevoir, Claude, Les Vignolans 5,**
**CH-2520 La Neuveville (CH)**

(74) Mandataire: **Seehof, Michel et al, c/o AMMANN**
**PATENTANWAELTE AG BERN Schwarztorstrasse 31,**
**CH-3001 Bern (CH)**

ACTORUM AG

## Description

La présente invention concerne un procédé de ravitaillement d'un tour en barres à usiner, lesdites barres étant tenues dans une unité de serrage de barre du tour et chaque barre étant guidée dans un dispositif guide-barre en forme de canal en deux parties dans lequel elle est déplacée en direction de la poupée du tour par un piston-poussoir, la réception d'un signal de fin de barre provoquant le recul du piston-poussoir vers l'arrière du dispositif guide-barre, l'arrivée du piston-poussoir à l'arrière du dispositif guide-barre provoquant l'ouverture du canal par écartement des parties de celui-ci, l'introduction latérale d'une nouvelle barre à usiner dans ce canal et la fermeture du canal.

L'invention concerne aussi un ravitailleur d'un tour en barres à usiner pour la mise en œuvre du procédé selon la revendication 1, avec un dispositif guide-barre en forme de canal en deux parties dans lequel la barre à usiner est déplacée en direction de la poupée du tour par un piston-poussoir venant appuyer, soutenir et centrer l'arrière de la barre, le piston-poussoir étant retiré par dépression vers l'arrière du dispositif guide-barre lorsqu'il atteint une position correspondant à la fin d'une barre, l'arrivée du piston-poussoir à l'arrière du dispositif guide-barre provoquant la séparation et l'écartement mutuel des parties du canal, l'introduction latérale d'une nouvelle barre à usiner dans ce canal et la fermeture du canal.

Le document US 2 577 203 décrit un ravitailleur d'un tour en barres à usiner tel que décrit dans le préambule de la revendication 5. Le ravitailleur comprend un tube de guidage en deux parties susceptible de s'écarter radialement l'une de l'autre pour permettre l'introduction d'une nouvelle barre à usiner dans le tube de guidage. Le ravitailleur comporte un piston-poussoir logé dans le tube de guidage pour soutenir l'arrière de la barre et la faire avancer en direction de la poupée du tour. Le déplacement du piston-poussoir dans le tube de guidage est commandée pneumatiquement et la barre n'est pas supportée dans son tube de guidage par un palier hydrodynamique. En outre, le piston-poussoir est retiré vers l'arrière du ravitailleur par dépression, mais pas pendant l'usinage de la dernière pièce dans la fin d'une barre déterminée, ce qui augmente les temps morts de la machine. Par le fait que la barre n'est pas supportée dans son tube de guidage par un palier hydrodynamique, elle ne peut pas atteindre de grandes vitesses de rotation.

En conséquence, le but de la présente invention est de raccourcir l'opération de ravitaillement de la machine pour augmenter la cadence de production.

Ce but est atteint par le procédé décrit dans la revendication 1 et par le ravitailleur décrit dans la revendication 5.

Le cycle de ravitaillement est raccourci par le fait que la nouvelle barre est introduite dans le dispositif guide-barre pendant l'opération d'usinage de la dernière pièce dans la fin de la barre précédente et aussi par le fait que la chute de la barre précédente est éjectée par l'avance de la nouvelle barre contre l'arrière de cette chute. Dans le revitailleur selon l'invention, le dispositif guide-barre est un canal en deux parties qui, lors du ravitaillement, sont écartées l'une de l'autre pour permettre l'introduction latérale de la nouvelle barre à usiner. Les dispositifs d'éjection de la chute, normalement prévus peuvent être supprimés par le fait que c'est l'avance de la nouvelle barre dans le dispositif guide-barre qui provoque l'éjection de la chute, cette avance étant produite par un piston-poussoir commandé de préférence hydrauliquement.

Une réalisation de l'invention va être décrite ci-après, à titre d'exemple et à l'aide du dessin dans lequel:

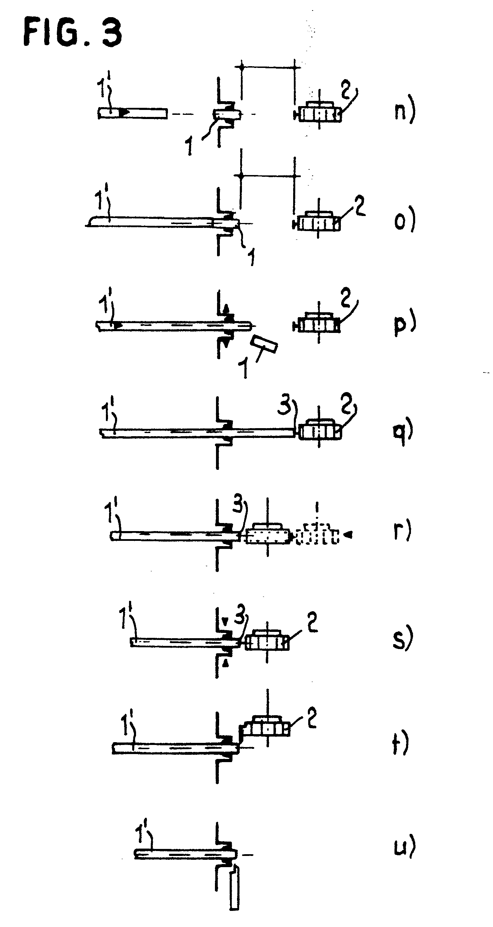

les figures 1 à 3 illustrent schématiquement les étapes respectives d'usinage d'une barre longue en cycle automatique, d'usinage de la dernière pièce en cycle automatique et le sous-programme de ravitaillement,

la figure 4 est une vue longitudinale schématique d'un ravitailleur selon l'invention,

la figure 5 est une vue en coupe du canal du ravitailleur de la figure 4,

la figure 6 montre les pistons de pression et de rappel du canal du ravitailleur,

la figure 7 est une vue en bout du ravitailleur de la figure 4,

la figure 8 est une coupe à travers la came de ravitaillement,

la figure 9 est une vue de la came de ravitaillement, et

la figure 10 est un schéma hydraulique simplifié du ravitailleur.

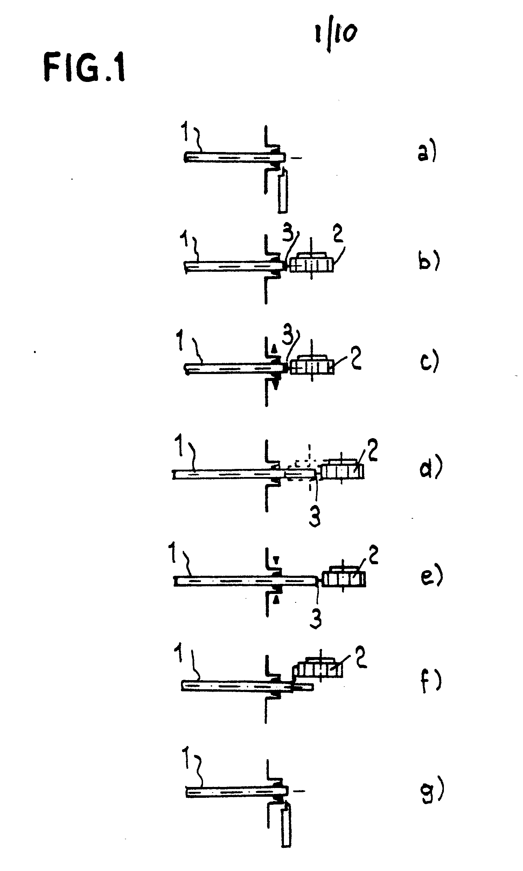

La figure 1 indique la suite d'opérations lors de l'usinage en cycle automatique d'une barre longue par un tour qui, en rapport avec le ravitailleur selon l'invention, est de préférence à commande numérique. La suite d'opérations est la suivante:

a) fin d'usinage,

b) la butée 3 du révolver 2 du tour vient se positionner en face de la barre à usiner 1,

c) ouverture de l'unité de serrage de la barre,

d) recul du révolver 2 et avance simultanée en direction de la poupée de la barre 1 contre la butée 3 du révolver. Le recul du révolver correspond à la longueur de barre à usiner,

e) fermeture de l'unité de serrage,

f) usinage d'une nouvelle pièce,

g) fin d'usinage.

Tant que la barre à usiner 1 est suffisamment longue, le cycle d'opération ci-dessus se répète automatiquement, chaque cycle complet correspondant à la production d'une pièce. Au cours du cycle automatique ci-dessus, un piston-poussoir est continuellement en appui sur la barre à usiner.

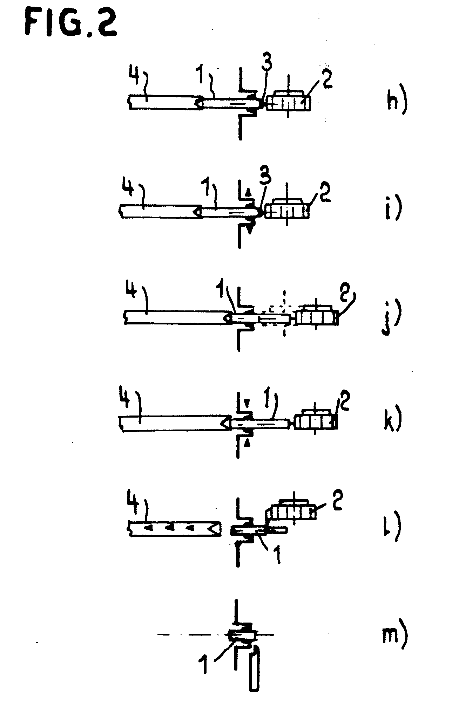

La figure 2 montre ce qui se passe lors de l'usinage de la dernière pièce dans la fin d'une barre.

h) la butée 3 du révolver 2 vient se positionner en face de la barre à usiner 1. Le piston-poussoir 4 est en appui sur l'arrière de la barre 1,

i) ouverture de l'unité de serrage de la barre,

j) recul du révolver 2 et avance simultanée en direction de la poupée de la barre 1 poussée par le piston-poussoir 4 contre la butée 3 du révolver. L'arrière du piston-poussoir 4, passant devant un détecteur, déclenche un signal «fin de barre» ou «manque matière»,

k) fermeture de l'unité de serrage. La réception d'un signal de fin de barre et d'un signal de fermeture de l'unité de serrage provoque le recul du piston-poussoir qui s'éloigne de la poupée du tour,

l) usinage de la dernière pièce. L'arrivée du piston-poussoir à l'extrémité arrière du dispositif guide-barre en forme de canal en deux parties est détectée et provoque l'ouverture radiale des deux parties du canal, l'introduction latérale d'une nouvelle barre entre les parties écartées radialement et la fermeture du canal,

m) fin d'usinage. La réception d'un signal de «fin d'usinage» ou d'«ordre de ravitaillement» et d'un signal «canal fermé» provoque l'avance en direction de la poupée de la nouvelle barre dans le canal et le passage du tour en sous-programme «ravitaillement».

Les opération du sous-programme «ravitaillement» sont les suivantes:

n) le révolver 2 vient se mettre en position à une distance de la poupée égale à la longueur maximale de la chute 1 plus une réserve et la nouvelle barre 1' avance dans le canal en direction de la poupée; attente de la fin du signal «manque matière»,

o) la nouvelle barre 1' vient buter contre l'arrière de la chute 1 et un signal «contrôle de pression» est délivré, indiquant la fin du signal «manque matière»,

p) ouverture de l'unité de serrage et éjection de la chute 1 par appui de la nouvelle barre 1' contre l'arrière de la chute,

q) la nouvelle barre 1' vient en contact avec la butée 3 du révolver 2,

r) le révolver avance en direction de la poupée et la nouvelle barre 1' recule dans une position de travail,

s) fermeture de l'unité de serrage sur la nouvelle barre 1',

t) usinage de la face avant de la nouvelle barre 1', et

u) fin du sous-programme «ravitaillement» et saut de programme à cycle automatique, c'est-à-dire au point a) (figure 1) du programme d'usinage d'une barre longue en cycle automatique.

Ce qui précède montre que le procédé de ravitaillement selon l'invention permet de diminuer les temps morts au cours du ravitaillement par le fait que la nouvelle barre est introduite dans son canal de guidage pendant l'usinage de la dernière pièce dans la fin de la barre précédente et de supprimer les dispositifs d'éjection de la chute normalement prévus à cet effet, cette éjection étant produite par appui de la nouvelle barre contre l'arrière de la chute lors de l'ouverture de l'unité de serrage. Il ressort également de la description précédente des différentes opérations que le procédé de ravitaillement selon l'invention est avantageusement mais pas obligatoirement appliqué sur une machine à commande numérique, en raison de la souplesse de commande d'une telle machine.

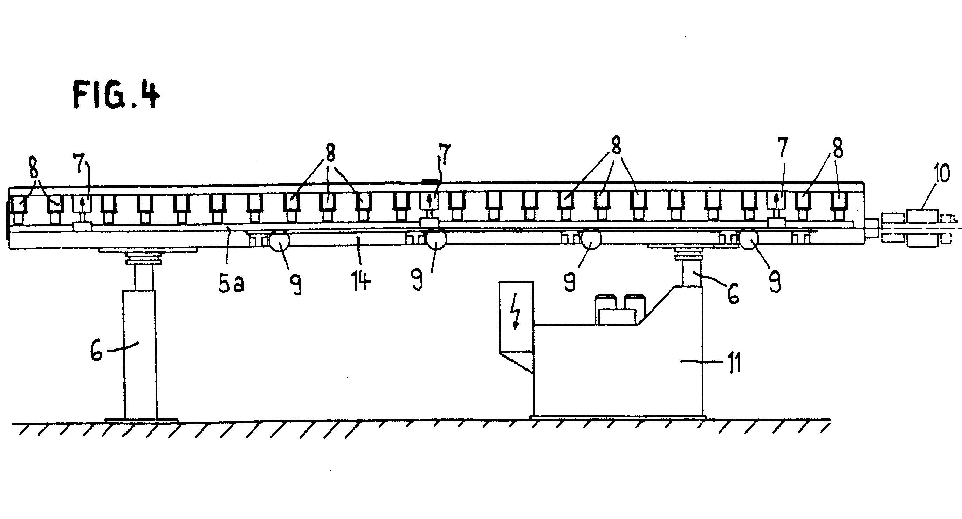

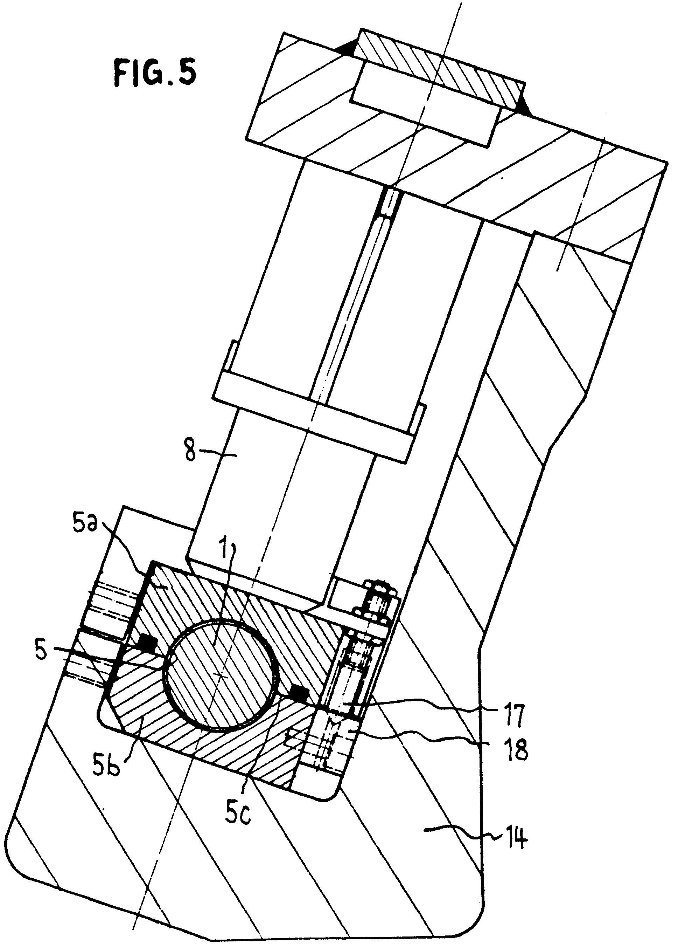

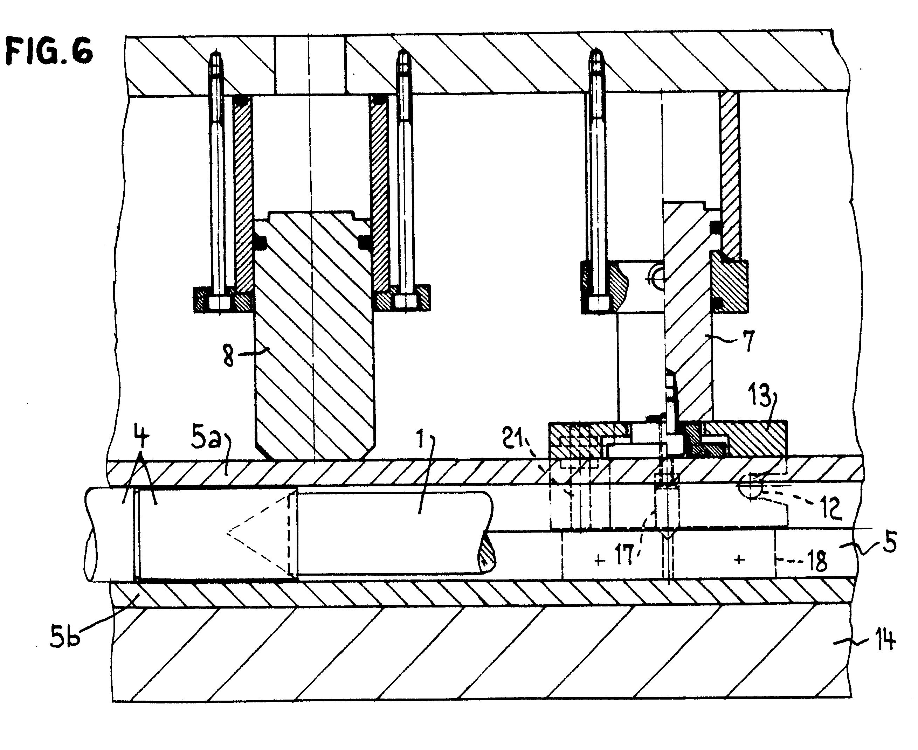

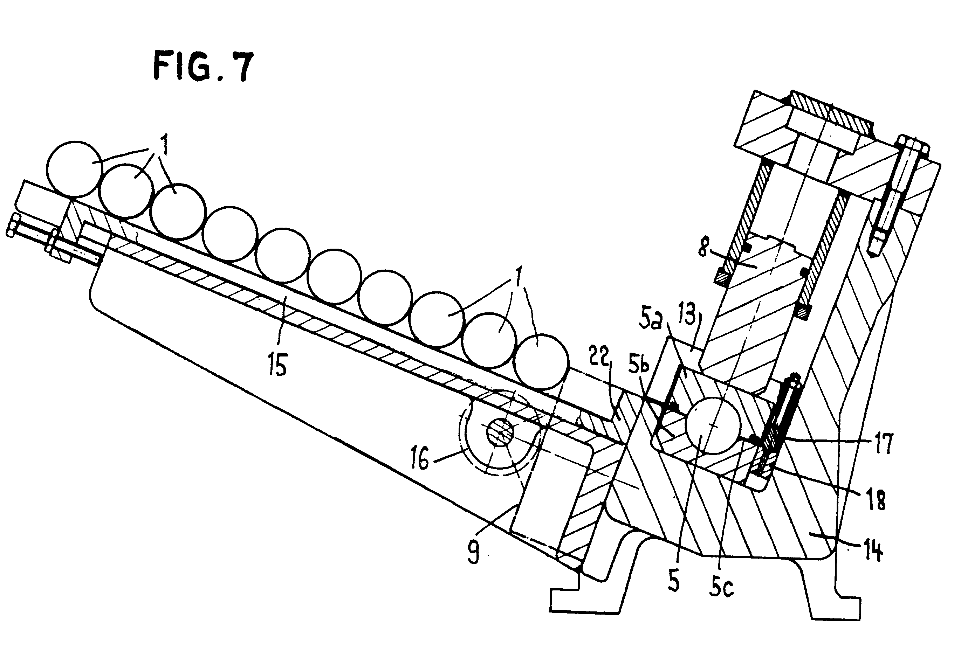

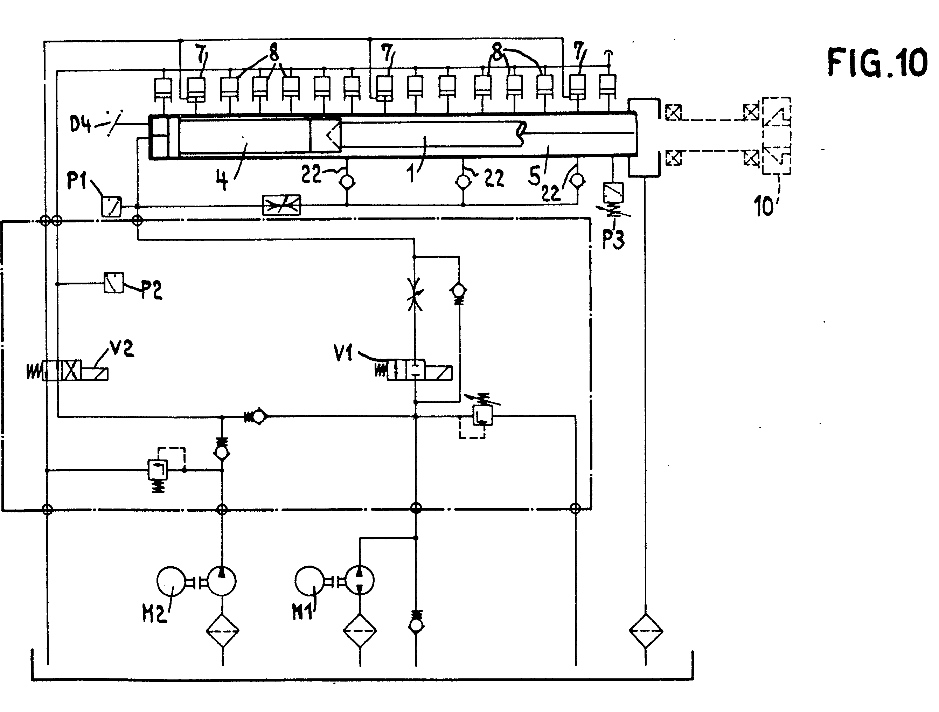

La figure 4 montre une vue longitudinale schématique d'un ravitailleur d'un tour en barres à usiner selon l'invention, fonctionnant selon le procédé décrit plus haut. Le ravitailleur comporte un canal 5 en deux parties 5a et 5b (figure 7). Le canal 5 est monté sur des supports 6. La partie supérieure 5a du canal est assemblée à des pistons de rappel 7 permettant de soulever cette partie et de la séparer de la partie inférieure 5b. Des pistons de pression 8 permettent de fermer le canal de manière étanche en appliquant avec une forte pression la partie 5a contre la partie inférieure 5b du canal. Des cames 9 permettent, lors du ravitaillement, d'introduire latéralement une nouvelle barre à usiner entre les parties 5a et 5b séparées du canal. Le canal 5 est un dispositif guide-barre dans lequel un piston-poussoir 4 (figure 6) commandé hydrauliquement provoque l'avance de la barre à usiner en direction du poste d'usinage et permet en même temps de soutenir et de centrer l'arrière de la barre en rotation. Des amenées radiales 22 (figure 10) d'huile sous pression entre la barre et le canal produisent une sustentation de la barre par palier hydrodynamique lorsque la barre est en rotation. Pour garantir une étanchéité parfaite du canal à l'état fermé, la pression exercée par les pistons 8 sur la surface d'appui commune 5c des parties 5a et 5b (figure 5) du canal doit être largement supérieure à la pression hydraulique agissant à l'intérieur du canal. Il est aussi nécessaire d'assurer une répartition de la pression aussi régulière que possible, cette répartition de la pression étant donnée par la disposition des pistons de pression 8. En outre, pour permettre l'introduction dans le canal 5 d'une nouvelle barre à usiner 1, le piston-poussoir 4 est au préalable retiré par dépression vers l'arrière du ravitailleur, de sorte qu'il est également nécessaire de réaliser une étanchéité du canal empêchant l'air de pénétrer dans cului-ci lors du retrait du piston, cette étanchéité étant aussurée par la planéité et la pression des surfaces en contact. Des joints d'étanchéité peuvent être utilisés mais ils ne sont pas obligatoirement nécessaires. Le ravitailleur est situé dans le prolongement de l'axe de la poupée 10 du tour et à proximité immédiate de celle-ci. Un système de distribution hydraulique 11 permet la commande des pistons de pression 8 et de rappel 7, du piston-poussoir 4 et l'alimentation en huile du canal fermé.

La figure 5 montre une vue en coupe du canal 5 avec un piston de pression 8. On reconnait la barre 1 dans le canal 5 ainsi que les deux parties 5a et 5b de ce canal.

La figure 6 montre une vue en coupe des pistons 7 et 8 et du canal 5. Le piston de rappel 7 est couplé à la partie supérieure 5a du canal 5 par un étrier en U 13 s'étendant à la partie supérieure et sur deux faces latérales de la partie 5a. L'étrier est couplé à cette partie 5a par une ouverture découpée dans laquelle est engagée une goupille 12 solidaire de la partie 5a. Cette disposition permet le retrait de la partie 5a du canal lors d'un changement de diamètre de barre à usiner. Lors de l'opération de ravitaillement, les pistons de pression 8 sont sans pression et les pistons 7 sont retirés par pression hydraulique, ces pistons soulevant la partie 5a du canal pour ouvrir ce dernier. La figure montre des détecteurs de proximité 21 qui délivrent un signal indiquant que le canal est fermé.

La figure 7 montre une vue en bout du ravitailleur selon l'invention. Le canal 5 comprend la partie 5b montée de manière fixe dans un bâti 14 du ravitailleur et la partie 5a mobile sur laquelle agissent les pistons de pression 8 et qui, lors du ravitaillement est soulevée par les pistons de rappel pour permettre l'introduction latérale d'une nouvelle barre dans la partie fixe 5b. Les barres 1 à ravitailler sont disposées côte-à-côte sur un tablier 15 formant plan incliné. L'axe de ces barres est parallèle à celui du canal 5. La première barre, vue depuis le canal, est arrêtée en position d'attente, contre une surface d'appui des cames 9 entraînées chacune d'un tour par un moteur 16 lors du ravitaillement. Une butée 22 réglable selon le diamètre des barres à usiner est prévue sur le tablier 15 au voisinage de la came 9. La figure 7 montre encore que des goupilles de centrage 17 sont prévues entre les étriers 13 et les plots de centrage du canal 18. Ces goupilles de centrage ont pour but d'assurer un alignement parfait des deux parties du canal lors de la fermeture de celui-ci.

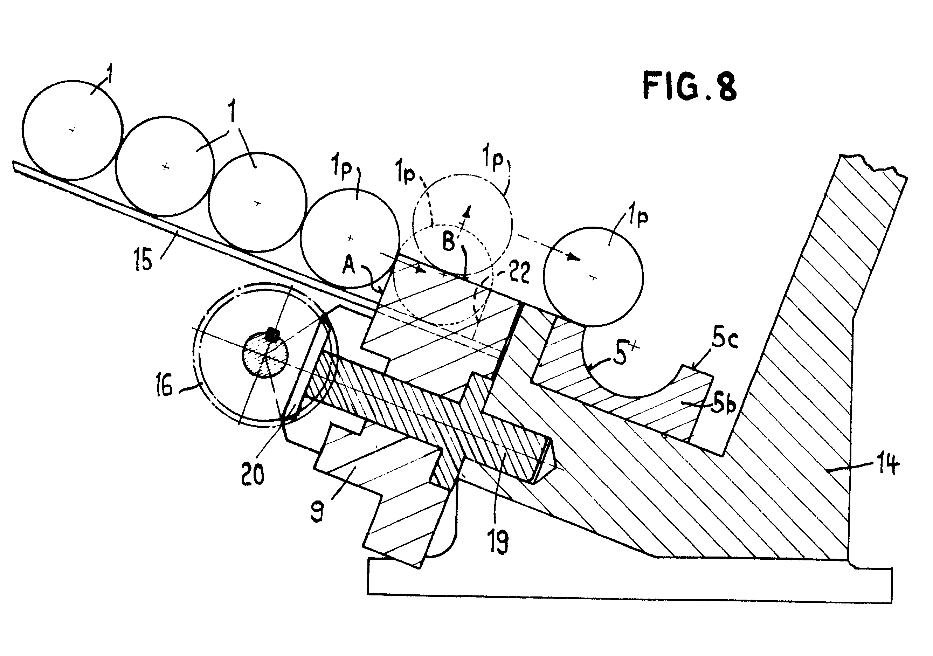

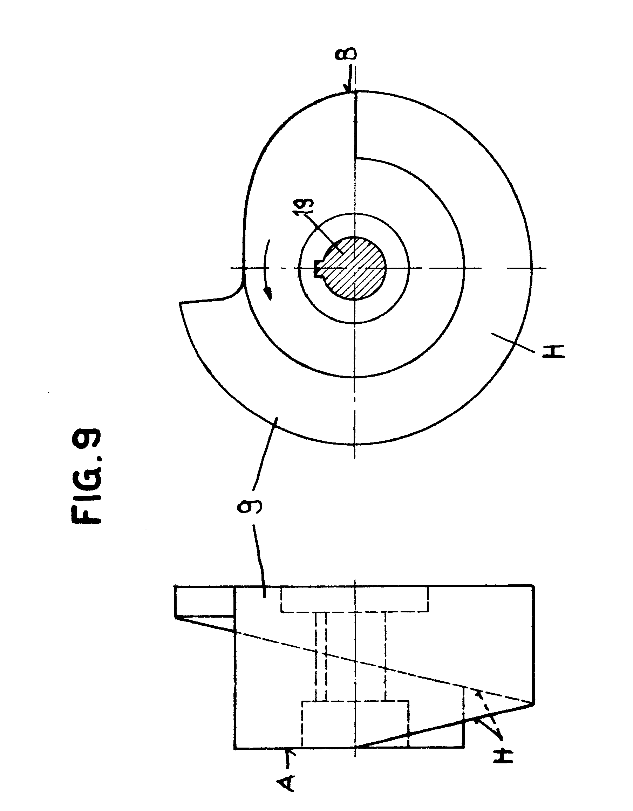

La figure 8 montre que la came 9 est montée sur un arbre 19 et mise en rotation par un engrenage cônique 20 à partir du moteur 16 et la figure 9 montre la configuration de cette came 9. La première barre 1p est en position d'attente contre une surface d'appui A perpendiculaire à l'axe de la came.

Lors du ravitaillement, la came se met en rotation et sa surface hélicoidale H permet une descente progressive et sans à-coup du paquet de barres 1, 1p en direction du canal 5. Au cours de cette première phase de rotation, la première barre 1p est peu à peu introduite contre la butée réglable 22. La came 9 continuant de tourner, la deuxième barre reste en contact avec la surface d'appui A et la montée B de la came soulève progressivement la barre 1p jusqu'à un niveau lui permettant de passer en roulant par dessus la butée 22, la partie du bâti 14 comprise entre la butée 22 et la partie fixe du canal 5b et de tomber latéralement dans cette partie du canal.

La figure 10 montre le schéma hydraulique simplifié du ravitailleur. Le dispositif comporte une première pompe M1 alimentant par une valve hydraulique V1 l'arrière du piston-poussoir 4 pour déplacer ce dernier dans le canal 5 et distribuant l'huile aux alimentations latérales 22 d'huile entre le tube et la barre à usiner. Une deuxième pompe M2 alimente par une valve hydraulique V2 soit les pistons de pression 8, soit les pistons de rappel 7 lors du retrait de la partie 5a du canal. Un détecteur D4 de fin de course délivre un signal lorsque le piston-poussoir 4 est entièrement retiré dans le canal 5. Un détecteur de pression P3 délivre un signal de fin de barre ou manque matière lorsque la partie arrière du piston-

poussoir 4 situé dans le canal à droite de ce détecteur. Un détecteur P1 contrôle la pression sur le piston-poussoir 4 et un détecteur P2 contrôle la pression de fermeture du canal. Le fonctionnement du dispositif est expliqué ci-dessous à partir du résumé des sequences de ravitaillement:

Position de départ

| Ravitailleur | Tour |
|---|---|
| Position «automatique» | «Cycle automatique», barres longues usinage continu |
| — canal 5 fermé, piston-poussoir 4 en appui sur la barre M2 enclenché V2 déclenchée M1 marche avant V1 enclenchée | |

A réception des deux signaux

| «manque matière», par P3, | «Unité de serrage fermée», par commande du tour |
|---|---|
| M1 en marche arrière (dépression) V1 enclenchée | |
| — le piston poussoir recule et actionne D4 M2 enclenché V2 enclenchée | le tour usine la dernière pièce |
| — le canal s'ouvre, les pistons 8 sont sans pression, les pistons 7 sont commandés hydrauliquement moteur 16 enclenché, rotation de la came 9 | |
| — une nouvelle barre est introduite dans le canal M2 enclenché V2 déclenchée | |
| — le canal se referme, les pistons 8 sont sous pression, les pistons 7 sont sans pression. | |

A réception des deux signaux

| «Canal fermé verrouillé», par détecteur 21 M1 en marche avant V1 enclenchée | «Ordre de ravitaillement», par commande du tour |
|---|---|
| — le piston-poussoir-avance | — le tour passe en sous-programme «ravitaillement» |
| | — indexage et positionnement de la butée |
| | — attente. |

A réception du signal «contrôle de pression», par P1 lors de l'appui nouvelle barre sur la chute
— le cycle de ravitaillement est terminé
— la barre avance
— recul de la barre

— ouverture de l'unité de serrage
— éjection de la chute
— avance de la butée
— fermeture de l'unité de serrage
— fin du sous-programme «ravitaillement»
— saut de programme à cycle automatique

Ce qui précède montre qu'en liaison avec un tour, de préférence à commande numérique, le ravitailleur décrit ci-dessus permet d'exécuter les fonctions indiqués en rapport avec le procédé de ravitaillement, de sorte qu'il conduit à une réduction des temps morts et à une augmentation de la cadence de production.

L'invention n'est pas limitée à la forme d'exécution du ravitailleur décrite ci-dessus. En particulier, le stockage des barres sur un plan incliné et le chargement des barres par une came peuvent être réalisés différemment. Il en est de même des moyens pour exercer la pression de fermeture du canal et le retrait de la partie supérieure de ce dernier.

**Revendications**

1. Procédé de ravitaillement d'un tour en barres à usiner (1), lesdites barres étant tenues dans une unité de serrage de barre du tour et chaque barre étant guidée dans un dispositif guide-barre en forme de canal (5) en deux parties (5a, 5b) dans lequel elle est déplacée en direction de la poupée du tour par un piston-poussoir (4), la réception d'un signal de fin de barre provoquant le recul du piston-poussoir (4) vers l'arrière du dispositif guide-barre, l'arrivée du piston-poussoir (4) à l'arrière du dispositif guide-barre provoquant l'ouverture du canal (5) par écartement des parties (5a, 5b) de celui-ci, l'introduction latérale d'une nouvelle barre à usiner (1) dans ce canal et la fermeture du canal, caractérisé en ce que le recul du piston-poussoir (4) vers l'arrière du dispositif guide-barre est provoqué, pendant l'usinage de la dernière pièce dans la fin d'une barre (1) déterminée, par la coincidence du signal de fin de barre et d'un signal de fermeture de l'unité de serrage, et par le fait que la réception d'un signal de fermeture du canal (5) et d'un signal d'ordre de ravitaillement donné par la fin de l'opération d'usinage de ladite dernière pièce provoque l'avance du piston-poussoir (4) et en conséquence de la nouvelle barre dans le canal (5).

2. Procédé selon la revendication 1, caractérisé en ce que le piston-poussoir supporte l'arrière de la barre et qu'il est déplacé hydrauliquement dans le dispositif guide-barre dans lequel la barre à usiner est en rotation dans de l'huile formant palier hydrodynamic.

3. Procédé selon la revendication 1, caractérisé en ce que ledit tour est à commande numèrique.

4. Procédé selon la revendication 3, caractérisé en ce que la commande numèrique comporte un sous-programme dit de ravitaillement selon lequel, lors de l'ouverture de l'unité de serrage, la nouvelle barre éjecte la chute de la barre précédente par appui contre l'arrière de cette chute, puis avance contre une butée d'un révolver porte-outil du tour, la butée étant située à une distance de la poupée au moins égale à la longueur maximale de la chute, la nouvelle barre étant ensuite repoussée dans une position de travail par l'avance du révolver en direction de la poupée, l'unité de serrage est fermée, ce qui permet l'usinage de la face avant de cette barre.

5. Ravitailleur d'un tour en barres à usiner (1) pour la mise en œuvre du procédé selon la revendication 1, avec un dispositif guide-barre en forme de canal (5) en deux parties (5a, 5b) dans lequel la barre à usiner (1) est déplacée en direction de la poupée du tour par un piston-poussoir (4) venant appuyer, soutenir et centrer l'arrière de la barre (1), le piston-poussoir (4) étant retiré par dépression vers l'arrière du dispositif guide-barre lorsqu'il atteint une position correspondant à la fin d'une barre, l'arrivée du piston-poussoir (4) à l'arrière du dispositif guide-barre provoquant la séparation et l'écartement mutuel des parties (5a, 5b) du canal (5), l'introduction latérale d'une nouvelle barre à usiner (1) dans ce canal et la fermeture du canal, caractérisé en ce que la barre à usiner (1) est en rotation dans de l'huile sous pression formant palier hydrodynamique, l'avance du piston-poussoir (4) étant commandée hydrauliquement et son recul étant effectué pendant l'usinage de la dernière pièce dans la fin d'une barre déterminèe, et par le fait qu'à l'état fermé du canal (5), les parties (5a, 5b) sont appuyées l'une contre l'autre sur une surface d'appui commune (5c) par des moyens de pression (8) agissant sur au moins l'une des parties (5a) du canal (5) afin de donner une étanchéité au canal capable de supporter la pression d'huile nécessaire pour former le palier hydrodynamique sans perte d'huile et le retrait par dépression du piston-poussoir (4) vers l'arrière du dispositif guide-barre sans perte d'air.

6. Ravitailleur selon la revendication 5, caractérisé en ce que les parties du canal sont une partie supérieure mobile (5a) et une partie inférieure fixe (5b), les moyens de pression sont des pistons de pression (8) appuyant la partie supérieure (5a) contre la partie inférieure (5b), des pistons de rappel (7) étant prévus pour retirer radialement la partie supérieure (5a) lors du ravitaillement afin de permettre l'introduction latérale d'une nouvelle barre à usiner (1) dans la partie inférieure fixe (5b) du canal (5).

7. Ravitailleur selon la revendication 6, caractérisé en ce que la disposition le long du canal (5) des pistons de pression (8) détermine une distribution régulière de la pression agissant sur la partie supérieure (5a) du canal pour assurer une fermeture étanche du canal.

8. Ravitailleur selon la revendication 6, caractérisé en ce que la pression exercée par les pistons de pression (8) sur la surface d'appui commune (5c) des parties (5a, 5b) du canal (5) est supérieure à la pression d'huile à l'intérieur du canal.

9. Ravitailleur selon la revendication 5, caractérisé en ce que des moyens d'alignement (17, 18) sont prévus pour garantir un positionnement relatif correct des parties (5a, 5b) du canal (5) à l'état fermé du dispositif.

10. Ravitailleur selon la revendication 5, caractérisé en ce qu'il comprend un tablier (15) sur lequel les barres à ravitailler sont stockées côte-à-côte, parallèlement à l'axe du canal (5) et à proximité immédiate de celui-ci, la première barre à ravitailler (1p) étant en position d'attente contre un appui mobile (9) du tablier (15).

11. Ravitailleur selon la revendication 10, caractérisé en ce que l'appui mobile est une came (9) à effet axial et radial, la came comprenant une surface d'appui (A) perpendiculaire à son axe contre laquelle la première barre (1p) est dans la position d'attente, la came comprenant en outre une surface hélicoïdale (H) permettant dans une première phase de rotation de la came (9), de faire avancer les barres (1, 1p) sans à-coups jusqu'à ce que la première barre (1p) arrive contre une butée réglable (22) du tablier (15), la came comprenant une montée radiale (B) permettant dans une seconde phase de rotation de la came (9) d'élever la barre (1p) en appui contre la butée réglable (22) et de la faire passer latéralement dans la partie inférieure (5b) du canal (5) tout en retenant par la surface d'appui (A) les barres restantes sur ledit tablier (15).

## Patentansprüche

1. Verfahren zum Zuführen von zu bearbeitenden Stangen (1) bei einer Drehbank, wobei die Stangen in einer Spannzange der Drehbank gehalten werden und jede Stange in einer aus zwei Teilen (5a, 5b) bestehenden Stangenführungsvorrichtung in Form eines Kanals geführt wird, in welcher sie durch einen Führungsschieber (4) zum Spindelstock des Drehbankes verschoben wird, wobei der Empfang eines Signales Ende der Stange den Rückschub des Führungsschiebers (4) nach dem Hinterteil der Stangenführungsvorrichtung einleitet, das Eintreffen des Führungsschiebers am Hinterteil der Stangenführungsvorrichtung die Öffnung des Kanals (5) durch Spreizen dessen Teile (5a, 5b), das seitliche Einführen einer neuen, zu bearbeitenden Stangen einleitet, dadurch gekennzeichnet, dass der Rückschub des Führungsschiebers (4) nach dem Hinterteil der Stangenführungsvorrichtung durch Koinzidenz des Signales Ende der Stange und eines Signales Spannzange geschlossen während der Bearbeitung des letzten Stückes am Endteil einer bestimmten Stange (1) ausgelöst wird, und dass der Empfang eines Signales Kanal (5) geschlossen und eines Signales Befehl Stangenzufuhr, welches durch das Ende der Bearbeitung des genannten letzten Stückes ausgelöst wird den Vorschub des Führungsschiebers (4) und damit der neuen Stange in den Kanal einleitet.

2. Verfahren nach Anspruch 1, dadurch gekennzeichnet, dass der Führungsschieber den Hinterteil der Stange abstützt, und dass er hydraulisch in der Stangenführungsvorrichtung verschoben wird, in welcher die zu bearbeitende Stange in dem ein hydrodynamisches Lager bildenden Öl rotiert.

3. Verfahren nach Anspruch 1, dadurch gekennzeichnet, dass die genannte Drehbank numerisch gesteuert wird.

4. Verfahren nach Anspruch 3, dadurch gekennzeichnet, dass die numerische Steuerung ein Teilprogramm, genannt Versorgungsteilprogramm, aufweist, nach welchem bei der Öffnung der Spannzange die neue Stange den Rest der alten Stange ausstösst, indem sie gegen die Hinterteile dieses Restes drückt und dann gegen einen Anschlag eines Revolverkopfes des Drehbankes vorrückt, wobei der Anschlag um mindestens eine Distanz vom Spindelstock entfernt ist, die gleich ist wie die maximale Länge des Restes, die neue Stange danach in eine Arbeitsstellung durch Verschieben des Revolvers auf den Spindelstock hin rückgeschoben wird, die Spannzange geschlossen wird, was die Bearbeitung der Vorderfläche der Stange erlaubt.

5. Stangenzuführvorrichtung für zu bearbeitende Stangen (1) bei einer Drehbank, zur Ausführung des Verfahrens gemäss Anspruch 1, mit einer Stangenführungsvorrichtung in Form eines Kanales (5) in zwei Teilen (5a, 5b), in welchem die zu bearbeitende Stange (1) durch einen Führungsschieber (4) zum Spindelstock verschoben wird, welcher gegen die Hinterseite der Stange (1) drückt und diese abstützt und zentriert, wobei der Führungsschieber (4) durch Unterdruck nach dem Hinterteil der Stangenführungsvorrichtung zurückgezogen wird, wenn er eine Stellung erreicht hat, welche dem Ende einer Stange entspricht, wobei das Eintreffen des Führungsschiebers (4) am Hinterteil der Stangenführungsvorrichtung die gegenseitige Trennung und das Spreizen der Teile (5a, 5b) des Kanals (5), das seitliche Einführen in diesen Kanal einer neuen zu bearbeitenden Stange und das Schliessen des Kanals einleitet, dadurch gekennzeichnet, dass die zu bearbeitende Stange (1) in dem ein hydrodynamisches Lager bildenden Öl unter Druck rotiert, wobei der Vorschub des Führungsschiebers (4) hydraulisch gesteuert ist und sein Rückschub während der Bearbeitung des letzten Stückes im Endteil einer bestimmten Stange geschieht, und dass im geschlossenem Zustand des Kanales (5) die Teile (5a, 5b) durch Druckmittel gegeneinander auf eine gemeinsame Auflagefläche (5c) gedrückt werden, welche auf mindestens einen der Teile (5a) des Kanals (5) wirken, um eine Dichtheit dem Kanal zu ergeben, die den zur Bildung des hydrodynamischen Lagers erforderlichen Öldruck ohne Ölverlust aushalten kann sowie den durch Unterdruck bewirkten Rückschub des Führungsschiebers (4) nach dem Hinterteil der Stangenführungsvorrichtung ohne Luftdurchtritt zu gewährleisten.

6. Stangenzuführvorrichtung nach Anspruch 5, dadurch gekennzeichnet, dass die Teile des Kanales aus einem beweglichen, oberen Teil (5a) und einem festen, unteren Teil (5b) bestehen, die Druckmittel Druckkolben (8) sind, welche den oberen Teil (5a) gegen den unteren Teil (5b) drücken, wobei Entfernungskolben (7) vorgesehen sind, um den oberen Teil (5a) bei der Stangenzufuhr radial zurückzuziehen vorgesehen sind, um das seitliche Einführen einer neuen zu bearbeitenden Stange (1) in den unteren, festen Teil (5b) des Kanales (5) zu erlauben.

7. Stangenzuführvorrichtung nach Anspruch 6, dadurch gekennzeichnet, dass die Anordnung der Druckkolben (8) längs des Kanales eine gleichmässige Verteilung des Druckes auf den oberen Teil (5a) bestimmt, um ein dichtes Schliessen des Kanales zu gewährleisten.

8. Stangenzuführvorrichtung nach Anspruch 6, dadurch gekennzeichnet, dass der Druck, welcher durch die Druckkolben (8) auf die gemeinsame Auflagefläche (5c) der Teile (5a, 5b) des Kanales (5) ausgeübt wird, grösser ist als der Öldruck im Kanal.

9. Stangenzuführvorrichtung nach Anspruch 5, dadurch gekennzeichnet, dass Mittel zum Ausrichten (17, 18) vorgesehen sind, um eine gegenseitige, korrekte Positionierung der Teile (5a, 5b) des Kanales (5) im geschlossenen Zustand der Stangenversorgungsvorrichtung zu gewährleisten.

10. Stangenzuführvorrichtung nach Anspruch 5, dadurch gekennzeichnet, dass sie einen Tisch (15) aufweist, auf welchem die zuzuführenden Stangen nebeneinander, parallel zur Achse des Kanales (5) und in dessen unmittelbarer Nähe gelagert sind, wobei die erste zuzuführende Stange (1p) gegen eine bewegliche Stütze (9) des Tisches in Wartestellung anliegt.

11. Stangenzuführvorrichtung nach Anspruch 10, dadurch gekennzeichnet, dass die bewegliche Stütze eine axial und radial wirkende Nockenscheibe ist, welche eine senkrecht zu ihrer Achse liegende Auflagefläche (A) aufweist, gegen welche die erste Stange (1p) in Wartestellung anliegt, wobei die Nockenscheibe weiter eine spiralförmige Fläche (H) aufweist, welche in einer ersten Rotationsphase der Nockenscheibe (9) den stossfreien Vorschub der Stangen (1) erlaubt, bis die erste Stange (1p) gegen einen regelbaren Anschlag (22) des Tisches (15) anschlägt, wobei die Nockenscheibe ein radiales Profil (B) aufweist, welches in einer zweiten Rotationsphase der Nockenscheibe (9) die Stange (1p), welche gegen den regelbaren Anschlag (22) anliegt zu heben erlaubt und sie seitlich in den unteren Teil (5b) des Kanales (5) überführt, während sie durch die Auflagefläche (A) die verbleibenden Stangen auf dem Tisch zurückhält.

## Claims

1. A process for feeding a lathe with bar stocks to be machined (1), said bar stocks being held in a clamping unit of the lathe and each bar stock being guided in a guide-bar device in form of a channel (5) in two parts (5a, 5b) in which it is shifted towards the head-stock of the lathe by a push-piston (4), the reception of a signal end of bar causing the backward movement of the push-piston (4) towards the rear part of the guide-bar device, the arrival of the push-piston (4) at the rear part of the guide-bar device causing the channel (5) to open by turning aside of the parts (5a, 5b) thereof, the introduction laterally in this channel of a new bar stock to be machined (1) and the closing of the channel, characterized in that the backward movement of the push-piston (4) towards the rear part of the guide-bar device takes place during the machining of a last piece in the end part of a determined bar stock by coincidence of the signal end of bar and of a signal indicating the closing of the clamping unit and in that the reception of a signal indicating the closing of the channel (5) and of a feeding signal which is delivered when the machining operation of said last piece is terminated causes the feed of the push-piston (4) and consequently of the new bar stock in the channel (5).

2. A process according to claim 1, characterized in that the push-piston supports the rear part of the bar stock and in that it is hydraulically shifted in the guide-bar device in which the bar stock to be machined is rotating in oil which forms a hydrodynamic bearing.

3. A process according to claim 1, characterized in that the lathe is numerically controlled.

4. A process according to claim 3, characterized in that the numerical control comprises a subroutine called subroutine of feeding in accordance to which at the time of opening of the clamping unit, the new bar stock ejects the remnant of the preceding bar stock by exerting a pressure against the rear part of said remnant, then the new bar stock is shifted against a stop of the turret-head of the lathe, the stop being located at a distance from the head-stock at least equal to the maximal length of the remnant, the new bar stock being then shifted bachwards to a position of machining by the movement of the turret-head towards the head-stock, the clamping unit is closed, which permits the machining of the front face of this bar-stock.

5. A feeding device for a lathe with bar stocks to be machined (1) for carrying out the process of claim 1, with a channel like guide-bar device (5) in two parts (5a, 5b) in which the bar stock to be machined (1) is shifted towards the head-stock of the lathe by a push-piston (4) which presses, supports and centers the rear part of the bar stock (1), the push-piston being withdrawn by depression towards the rear part of the guide-bar device when it reaches a position corresponding to the end part of a bar stock, the arrival of the push-piston (4) to the rear part of the guide-bar device causing the separation and the mutual turning aside of the parts (5a, 5b) of the channel (5), the introduction laterally of a new bar stock to be machined (1) in this channel and the closing of the channel, characterized in that the bar stock to be machined (1) is rotating in oil under pressure forming hydrodynamic bearing, the feed of the push-piston (4) being hydraulically controlled and its backward movement taking place during the machining of the last piece in the end part of a determined bar stock, and in that in the closed condition of the channel (5), the parts (5a, 5b) are pressed one upon the other on a common resting surface (5c) by pressure means (8) acting on at least one of said parts (5a) of the channel (5) in order to cause a tightness of the channel capable to support the oil pressure necessary for building the hydrodynamic bearing without any loss of oil and the backward movement of the push-piston by depression towards the rear part of the guide-bar device without any loss of air.

6. A feeding device according to claim 5, characterized in that the parts of the channel are an upper movable part (5a) and a lower, fixed part (5b), in that the pressure means are pressure pistons (8) pressing the upper part (5a) against the lower part (5b), pull back pistons (7) being provided for radially withdrawing the upper part (5a) at the time of provisioning, for permitting the lateral introduction in the lower part (5b) of the channel of a new bar stock to be machined (1).

7. A feeding device according to claim 6, characterized in that the arrangement of the pressure pistons (8) along the channel (5) determines a uniform distribution of the pressure acting on the upper part (5a) of the channel, in order to ensure an impervious channel in the closed condition thereof.

8. A feeding device according to claim 6, characterized in that the pressure exerted by the pressure pistons (8) on the common resting surface (5c) of the parts (5a, 5b) of the channel (5) is greater than the oil presure in the channel.

9. A feeding device according to claims 5, characterized in that alignment means (17, 18) are provided for ensuring a correct mutual positioning of the parts (5a, 5b) of the channel (5), in the closed condition of the device.

10. A feeding device according to claim 5, characterized in that it comprises a table (15) on which the bar stocks to be introduced in the channel are stocked side by side, parallel to the axis of the channel (5) and at close proximity thereof, the first bar stock (1p) to be introduced being in a waiting position against a mobile support (9) of the table (15).

11. A feeding device according to claim 10, characterized in that the mobile support is an axially and radially working cam (9), the cam comprising a resting surface (A) perpendicular to its axis against which the first bar stock (1p) is in waiting position, the cam further comprising a helicoidal surface (H) permitting in a first phase of rotation of the cam (9) to shift without jerks the bar stocks (1, 1p) until the first bar stock (1p) comes in contact against an adjustable stop (22) of the table (15), the cam comprising a radial profile (B) which permits in a second phase of rotation of the cam (9) to lift the bar stock (1p) resting against the adjustable stop (2) and to let it pass laterally in the lower part (5b) of the channel (15) while holding back by the resting surface (A) the remaining bar stocks on said table (15).

# FIG.1

a)

b)

c)

d)

e)

f)

g)

# FIG.2

h)

i)

j)

k)

l)

m)

FIG. 3

n)

o)

p)

q)

r)

s)

t)

u)

# FIG.4

0 128 257

FIG.5

FIG.6

FIG. 7

0 128 257

FIG.8

**FIG. 9**

19

B

H

9

A

H

**FIG.10**

0 128 257